# EUROPÄISCHE PATENTSCHRIFT

(11) **EP 3 838 647 B1**
(45) Veröffentlichungstag und Bekanntmachung des Hinweises auf die Patenterteilung: **09.11.2022**
(21) Anmeldenummer: 20214565.2
(22) Anmeldetag: 16.12.2020
(51) Int. Cl.: B60K 37/02, B60K 37/06, B60K 28/12, B60R 11/02, B62D 25/24, B60K 35/00

(54) **ANZEIGE FÜR EIN FAHRZEUG**
DISPLAY FOR A VEHICLE
AFFICHAGE POUR UN VÉHICULE

(30) Priorität: 18.12.2019 DE 102019220093
(43) Veröffentlichungstag der Anmeldung: 23.06.2021
(73) Patentinhaber: Continental Automotive Technologies GmbH, 30165 Hannover (DE)
(72) Erfinder: Hohmann, Kai, 65824 Schwalbach a. Ts. (DE); Fokkelman, Joris, 65824 Schwalbach a. Ts. (DE)
(74) Vertreter: Continental Corporation

(56) Entgegenhaltungen:
- DE-A1-102010 007 204
- DE-A1-102012 009 018
- DE-A1-102016 124 407
- DE-A1-102016 224 260
- US-A- 5 757 595
- US-A1- 2011 043 355

## Beschreibung

Die Erfindung betrifft eine Anzeige für ein Fahrzeug, wobei die Anzeige in einem Gehäuse angeordnet ist und von außerhalb des Fahrzeuges wahrnehmbar ist. Bedienung bzw. Interaktion mit dem Fahrzeug erfolgen zunehmend durch Touchscreens. Dies ist mittlerweile der Standard im Fahrzeuginnenraum. Displays, die von außen sichtbar und bedienbar sein müssen, werden ein neues Applikationsfeld sein. Dies wird insofern besonders wichtig im Zuge von automatisiertem Fahren durch z.B. People-Mover oder auch Carsharing Anwendungen. Hier können sich Fahrzeugnutzer am Fahrzeug legitimieren und/oder Informationen (z.B. Codes, Begrüßungen) des Fahrzeugs entgegennehmen. Von außen sichtbare Displayoberflächen können Umwelteinflüssen ausgesetzt sein, die zu Verunreinigungen oder Verschmutzungen der Displayoberfläche und somit auch zur Nichtablesbarkeit führen können. Verunreinigungen oder Verschmutzungen der Displayoberfläche bei Touchscreens können zur Nichtbedienbarkeit des Touchscreens führen.

Die DE 10 2016 224260 A1 beschreibt eine Anzeigevorrichtung mit den Merkmalen des Oberbegriffs des Patentanspruch 1. Die DE 10 2012 009018 A1 beschreibt ein Fahrzeug mit einer Anzeigevorrichtung, bei der das Gehäuse werkzeuglos öffenbar ist und die örtliche Position des Fahrzeuges (100) bestimmbar ist Die DE 10 2016 124407 A1 beschreibt eine Anzeigevorrichtung wobei die Anzeige in einem Gehäuse) angeordnet ist und von außerhalb des Fahrzeuges (100) wahrnehmbar ist und das Gehäuse zumindest teilweise transparent ausgestaltet ist. Die US 2011/043355 A1 und US 5 757 595 A beschreiben jeweils eine Anzeige für ein Fahrzeug, wobei die Anzeige in einem Gehäuse angeordnet ist und von außerhalb des Fahrzeuges wahrnehmbar ist wobei das Gehäuse werkzeuglos öffenbar ist, so dass der Anzeigeinhalt der Anzeige wahrnehmbar ist

Aufgabe der Erfindung ist es daher, eine Anzeige in einem Gehäuse anzugeben, die von außerhalb eines Fahrzeuges wahrnehmbar ist, die vor Verschmutzungen geschützt und weiterhin verbessert ist.

Diese Aufgabe wird dadurch gelöst, dass das Gehäuse werkzeuglos öffenbar ist, so dass der Anzeigeinhalt der Anzeige wahrnehmbar ist. Hierdurch wird erreicht, dass die Anzeige weitestgehend vor Umwelteinflüssen geschützt ist und nur bei Gebrauch kurzzeitig Umwelteinflüssen direkt ausgesetzt ist.

Weiterhin ist erfindungsgemäß das Gehäuse automatisch öffenbar die örtliche Position des Fahrzeuges bestimmbar und in Abhängigkeit der Position das Gehäuse öffenbar ausgestaltet. Hierdurch wird erreicht, dass ein möglicher Nutzer der Anzeige diese beguem ohne eigene vorangehende Aktion nutzen kann. Wenn die Anzeige als Touchscreen ausgestaltet ist, kann die Anzeige auch als Bedienelement eingesetzt werden.

Sofern das Gehäuse zumindest teilweise transparent ausgestaltet ist, kann die Anzeige auch vor dem Öffnen des Gehäuses wahrgenommen und eine auf der Anzeige dargestellte Information von einem Betrachter der Anzeige aufgenommen werden.

Wenn die Anzeige eine Erfassungseinrichtung aufweist oder mit einer Erfassungseinrichtung verbunden ist und die Erfassungseinrichtung zur Erfassung einer sich der Anzeige nähernden Personen ausgestaltet ist, können je nach der sich der Anzeige nähernden Person unterschiedliche Informationen dargestellt werden. Auch ist es so möglich, vertrauliche Informationen nur einem begrenzten Personenkreis zugänglich zu machen.

Sofern die Erfassungseinrichtung zur Erfassung einer Legitimation der sich der Anzeige nähernden Person ausgestaltet ist können bestimmte Informationen nur an befugte Personen ausgegeben werden. Auch ist es möglich, je nach der erfassten Person das Gehäuse zu öffnen.

Sofern die Legitimation der sich der Anzeige nähernden Person mittels einer mobilen Sendeeinrichtung übertragbar ist kann die Legitimation ohne manuelle Eingabe an der Anzeige erfolgen.

Wenn die mobile Sendeeinrichtung als Mobiltelefon ausgestaltet ist kann auf eine separate, zusätzliche Sendeeinrichtung verzichtet werden, da ein Großteil der Bevölkerung ein Mobiltelefon ständig mit sich führt und die Mobiltelefone durch sogenannte Apps leicht auch diese Funktion übernehmen können.

Sofern
das Gehäuse eine verschwenkbare Abdeckung aufweist kann eine leicht herstellbare und bedienbare Abdeckung realisiert werden, die zudem einfach durch einen elektrischen Motor bewegt werden kann.

Wenn das Gehäuse eine verschiebbare Abdeckung aufweist, kann diese Ausführung auch gut und einfach realisiert werden.

Die Erfindung wird nachfolgend anhand der Figuren näher erläutert.

Es zeigen:
Figur 1 eine Teilansicht eines Fahrzeugs mit einem Ausführungsbeispiel der Erfindung in einer ersten Position
Figur 2 das Ausführungsbeispiel aus Figur 1 in einer zweiten Position

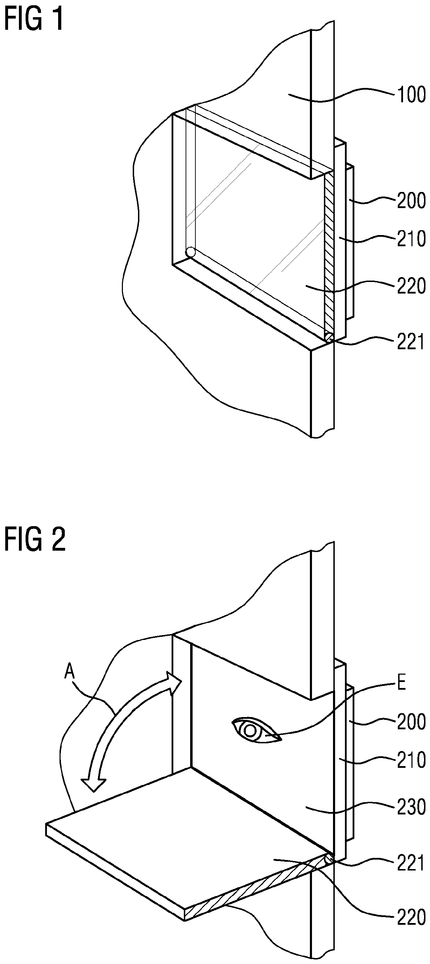

In Figur 1 erkennt man eine Karosserie 100 eines ansonsten nicht dargestellten Fahrzeuges, eine Anzeige mit einem elektrooptischen Display 200 und einem Deckglas 210. Weiterhin erkennt man eine Abdeckung 220 mit einer Schwenkachse 221 eines ansonsten nicht dargestellten Gehäuses. Die Abdeckung 220 deckt das Deckglas der Anzeige vollständig ab, so dass das Deckglas 210 und damit die Anzeige mit dem elektrooptischen Display 200 vollständig vor Witterungseinflüssen geschützt ist. Das Deckglas kann wie sein Name sagt aus Glas hergestellt sein, es ist aber auch möglich, einen transpatenten Kunststoff zu verwenden Das sonstige Gehäuse ist in den Figuren nicht dargestellt.

In Figur 2 ist die Abdeckung 220 um ihre Schwenkachse 221 gedreht und gibt so die Ansicht auf die Anzeige aufweisend das elektrooptische Display 200 und das Deckglas 210 frei. Weiterhin erkennt man eine berührungssensitive Oberfläche 230, die vor dem Deckglas 210 angeordnet ist und die Anzeige 200, 210 zu einem Touchscreen weiterbildet. Mit der berührungssensitiven Oberfläche 230 kann ein Ort bestimmt werden, an dem ein Eingabeorgan, beispielsweise ein Finger einer Person, die berührungssensitive Oberfläche berührt. Die berührungssensitive Oberfläche kann beispielsweise kapazitiv oder resistiv ausgestaltet sein. Auf der elektrooptischen Anzeige wird in Figur 2 ein Auge E dargestellt. Ein nicht dargestellter Motor kann die Abdeckung 220 um die Schwenkachse 221 verschwenken.

Die Abdeckung kann auch verschiebbar oder verdrehbar ausgestaltet sein.

## Patentansprüche

1. Anzeige (200, 210) für ein Fahrzeug, wobei die Anzeige (200, 210) in einem Gehäuse (220) angeordnet ist und von außerhalb des Fahrzeuges (100) wahrnehmbar ist, wobei das Gehäuse (220) werkzeuglos und automatisch öffenbar ist, so dass der Anzeigeinhalt (E) der Anzeige (200, 210) wahrnehmbar ist, **dadurch gekennzeichnet, dass** die örtliche Position des Fahrzeuges (100) bestimmbar ist und dass das Gehäuse (220) in Abhängigkeit der örtlichen Position des Fahrzeuges (100) öffenbar ist.

2. Anzeige (200, 210) nach Patentanspruch 1, **dadurch gekennzeichnet, dass** die Anzeige (200, 210) als Touchscreen (200, 210, 230) ausgestaltet ist.

3. Anzeige (200, 210) nach einem der vorstehenden Patentansprüche, **dadurch gekennzeichnet, dass** das Gehäuse (220) zumindest teilweise transparent ausgestaltet ist.

4. Anzeige (200, 210) nach einem der vorstehenden Patentansprüche, **dadurch gekennzeichnet, dass** die Anzeige (200, 210) eine Erfassungseinrichtung aufweist oder mit einer Erfassungseinrichtung verbunden ist, dass die Erfassungseinrichtung zur Erfassung der sich der Anzeige (200, 210) nähernden Personen ausgestaltet ist.

5. Anzeige (200, 210) nach Patentanspruch 4, **dadurch gekennzeichnet, dass** die Erfassungseinrichtung zur Erfassung einer Legitimation der sich der Anzeige nähernden Person ausgestaltet ist.

6. Anzeige (200, 210) nach Patentanspruch 5, **dadurch gekennzeichnet, dass** die Legitimation der sich der Anzeige (200, 210) nähernden Person mittels einer mobilen Sendeeinrichtung übertragbar ist.

7. Anzeige (200, 210) nach Patentanspruch 6, **dadurch gekennzeichnet, dass** die mobile Sendeeinrichtung als Mobiltelefon ausgestaltet ist.

8. Anzeige (200, 210) nach einem der vorstehenden Patentansprüche, **dadurch gekennzeichnet, dass** das Gehäuse (220) eine verschwenkbare Abdeckung (220) aufweist.

9. Anzeige (200, 210) nach einem der vorstehenden Patentansprüche 1-8, **dadurch gekennzeichnet, dass** das Gehäuse eine verschiebbare Abdeckung aufweist.

## Claims

1. Display (200, 210) for a vehicle, wherein the display (200, 210) is arranged in a housing (220) and is perceivable from outside the vehicle (100), wherein the housing (220) is openable without tools and automatically so that the display content (E) of the display (200, 210) is perceivable, **characterized in that** the spatial position of the vehicle (100) is determinable and **in that** the housing (220) is openable in dependence on the spatial position of the vehicle (100).

2. Display (200, 210) according to Patent Claim 1, **characterized in that** the display (200, 210) is designed as a touchscreen (200, 210, 230).

3. Display (200, 210) according to any of the preceding patent claims, **characterized in that** the housing (220) is designed to be at least partially transparent.

4. Display (200, 210) according to any of the preceding patent claims, **characterized in that** the display (200, 210) has a detection device or is connected to a detection device, **in that** the detection device is designed for detecting the persons approaching the display (200, 210).

5. Display (200, 210) according to Patent Claim 4, **characterized in that** the detection device is designed for detecting a legitimation of the person approaching the display.

6. Display (200, 210) according to Patent Claim 5, **characterized in that** the legitimation of the person approaching the display (200, 210) is transmittable by means of a mobile transmission device.

7. Display (200, 210) according to Patent Claim 6, **characterized in that** the mobile transmission device is in the form of a mobile telephone.

8. Display (200, 210) according to any of the preceding patent claims, **characterized in that** the housing (220) has a pivotable cover (220).

9. Display (200, 210) according to any of the preceding Patent Claims 1-8, **characterized in that** the housing has a slidable cover.

## Revendications

1. Unité d'affichage (200, 210) destinée à un véhicule, l'unité d'affichage (200, 210) étant disposée dans un boîtier (220) et pouvant être vue de l'extérieur du véhicule (100), le boîtier (220) pouvant être ouvert sans outils et automatiquement de manière à pouvoir voir le contenu (E) de l'unité d'affichage (200, 210), **caractérisée en ce que** la position locale du véhicule (100) peut être déterminée et **en ce que** le boîtier (220) peut être ouvert en fonction de la position locale du véhicule (100).

2. Unité d'affichage (200, 210) selon la revendication 1, **caractérisée en ce que** l'unité d'affichage (200, 210) est conçue sous la forme d'un écran tactile (200, 210, 230).

3. Unité d'affichage (200, 210) selon l'une des revendications précédentes, **caractérisée en ce que** le boîtier (220) est conçu pour être au moins partiellement transparent.

4. Unité d'affichage (200, 210) selon l'une des revendications précédentes, **caractérisée en ce que** l'unité d'affichage (200, 210) comporte un dispositif de détection ou est reliée à un dispositif de détection, **en ce que** le dispositif de détection est conçu pour détecter des personnes approchant de l'unité d'affichage (200, 210).

5. Unité d'affichage (200, 210) selon la revendication 4, **caractérisée en ce que** le dispositif de détection est conçu pour détecter une autorisation de la personne s'approchant de l'unité d'affichage.

6. Unité d'affichage (200, 210) selon la revendication 5, **caractérisée en ce que** l'autorisation de la personne s'approchant de l'unité d'affichage (200, 210) peut être transmise au moyen d'un dispositif de transmission mobile.

7. Unité d'affichage (200, 210) selon la revendication 6, **caractérisée en ce que** le dispositif de transmission mobile est conçu sous la forme d'un téléphone mobile.

8. Unité d'affichage (200, 210) selon l'une des revendications précédentes, **caractérisée en ce que** le boîtier (220) comporte un couvercle pivotant (220).

9. Unité d'affichage (200, 210) selon l'une des revendications précédentes 1 à 8, **caractérisée en ce que** le boîtier comporte un couvercle coulissant.
